# EUROPEAN PATENT SPECIFICATION

(11) **EP 1 967 768 B1**
(45) Date of publication and mention of the grant of the patent: **02.11.2011**
(21) Application number: 08250732.8
(22) Date of filing: 04.03.2008
(51) Int. Cl.: F16H 55/56

(54) **Continuously variable transmission**
Stufenlos verstellbares Getriebe
Transmission variable continue

(30) Priority: 05.03.2007 JP 2007054481
(43) Date of publication of application: 10.09.2008
(73) Proprietor: Yamaha Hatsudoki Kabushiki Kaisha, Shizuoka-ken Shizuoka 438-8501 (JP)
(72) Inventor: Aoyami, Atsushi, Iwata-shi Shizuoka-ken 438-8501 (JP); Katsuno, Koutarou, Iwata-shi Shizuoka-ken 438-8501 (JP); Takeda, Fumio, Iwata-shi Shizuoka-ken 438-8501 (JP); Oosawa, Takunori, Iwata-shi Shizuoka-ken 438-8501 (JP); Kimura, Yoshifumi, Iwata-shi Shizuoka-ken 438-8501 (JP)
(74) Representative: Lamb, Martin John Carstairs

(56) References cited:
- EP-A1- 1 650 475
- DE-A1- 3 037 395
- US-A- 3 174 348
- US-A- 3 705 517

## Description

### FIELD OF THE INVENTION

This invention relates to a CVT (continuously variable transmission) and a straddle type of vehicle provided with such a CVT.

### BACKGROUND TO THE INVENTION

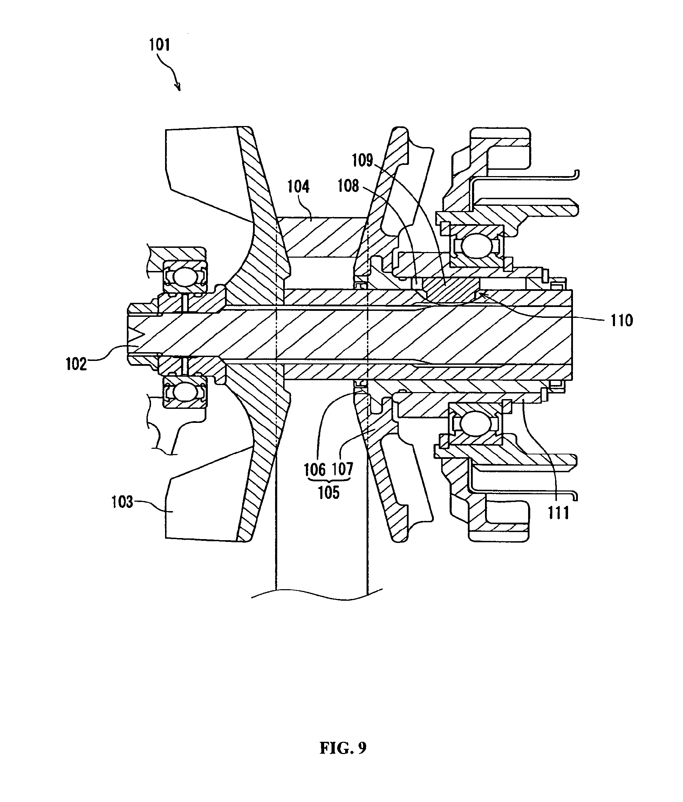

In a typical CVT, a key has been in use for some time in a constitution in which a movable half, which supports a belt together with a fixed sheave half, is rotatable while being driven by a crankshaft and axially movable relative to the crankshaft. US 3705517 constitutes the closest prior art. Such an arrangement is disclosed in, for example, JP-A-2006-118630. FIG. 9 shows a cross section of a primary sheave 101 of a conventional CVT in which a key is used. As shown in FIG. 9, the primary sheave 101 is made up of: a fixed sheave half 103 fixed to the crankshaft 102, and a movable sheave half 105 for supporting a belt 104 together with the fixed sheave half 103. The movable sheave half 105 is made up of a boss portion 106 of a generally cylindrical shape covering the crankshaft 102, and a main part 107 for coming into contact with a belt 104.

The boss portion 106 is formed with a keyway 108 extending axially relative to the crankshaft 102, with a key 109 inserted in the keyway 108. On the other hand, the crankshaft 102 is formed with a holding groove 110, with the inside end of the key 109 fit in the holding groove 110. In this way, the movable sheave half 105 is adapted to be rotatably as driven by the crankshaft 102 while being axially movable relative thereto.

While the engine is in operation, large pressures are applied to the piston of the engine due to combustion of an air/fuel mixture. At this time, corresponding large forces are applied to the crankshaft to which a piston is connected through a connecting rod. Therefore, the crankshaft 102 undergoes slight elastic deflection. As a result, the crankshaft 102, while rotating, may be subject to vibration due to the motion of the piston and the connecting rod.

When the crankshaft 102 rotates under vibration, there may be a case in which the key 109 runs wild in the keyway 108 and in the holding groove 110. If the key 109 runs wild, the outside face (top face) of the key 109 will collide with the supporting member 111 provided on the outside surface of the boss portion 106. This has resulted in the problem of noise being produced.

One object of the invention is to provide a CVT with the key-caused noise restricted and provide a straddle type of vehicle with noise reduced.

### SUMMARY OF THE INVENTION

According to an aspect of the present invention there is provided a continuously variable transmission comprising:
a fixed sheave fixed to a rotary shaft;
a movable sheave having a boss portion axially slidably mounted about the rotary shaft, wherein the boss portion comprises an axially extending keyway;
a key inserted to be freely axially slidable in the keyway and adapted to rotatably couple the rotary shaft and the boss portion;
a supporting member disposed around and axially secured relative to the boss portion to cover the keyway; and
a damping member disposed between an outer face of the key and an inside face of the supporting member and adapted to move axially relative to the key, wherein an axial length of the damping member is greater than the axial length of the key.

The continuously variable transmission may further comprise a collar rotatably secured relative to the rotary shaft and disposed between an outside surface of the rotary shaft and an inside surface of the boss portion. The collar may be formed with a holding groove adapted to receive an inner end of the key. In this arrangement the key may extend through the collar between the boss portion and the rotary shaft.

The damping member may cover the keyway. The damping member may be adapted to rotate relative to the boss portion. The damping member may be of a cylindrical shape. The damping member may be provided with an axially extending cutout. The damping member may comprise a material lower in hardness than the material of the supporting member. The damping member may comprise a plastic material. The damping member may comprise a fiberglass reinforced plastic material.

The key may define a curved outer surface. The curved outer surface of the key may be curved with respect to both the axis of the rotary shaft and the circumferential direction of the rotary shaft. The curved outer surface of the key may be defined by a surface having no generatrix. The curved outer surface of the key may defines a spherical surface.

The damping member may define a curved surface with respect to the circumferential direction of the rotary shaft. The curvature of the curved outer surface of the key as seen in the axial direction of the rotary shaft may be greater than the curvature of the curved surface of the damping member.

According to another aspect of the present invention there is provided a CVT comprising: a fixed sheave half fixed to a rotary shaft, a movable sheave half, having a boss portion covering the outside circumferential surface of the rotary shaft and with a keyway extending in the axial direction of the rotary shaft, and freely movable in the axial direction of the rotary shaft, a key inserted to be freely slidable in the keyway, for rotating together with the rotary shaft while transmitting the torque of the rotary shaft to the boss portion, a supporting member disposed around the boss portion to cover the keyway, to be incapable of making axial motion relative to the boss portion, and a damping member provided between the outside round face of the key and the inside round face of the supporting member, with its axial length greater than the axial length of the key, and disposed to be capable of making axial motion relative to the key.

In the above CVT, the damping member is provided between the key and the supporting member. Therefore, even if the key runs wild as the rotary shaft rotates while being accompanied by vibration and the outer circumferential surface comes into contact with the damping member, impact of collision is alleviated. Therefore, the above CVT, unlike the conventional CVT, makes it possible to restrict noise caused by the contact between the key and the supporting member. The damping member is also disposed to be axially movable relative to the key. Therefore, the key does not contact always at the same part on the damping member but the contact point changes within the damping member. Thus, it is possible to restrict wear on the damping member and improve durability of the damping member.

According to a further aspect of the present invention there is provided a continuously variable transmission comprising:
a fixed sheave half fixed to a rotary shaft,
a movable sheave half, having a boss portion covering the outside circumferential surface of the rotary shaft and with a keyway extending in the axial direction of the rotary shaft, and freely movable in the axial direction of the rotary shaft,
a collar formed with a holding groove, disposed between the outside round surface of the rotary shaft and the inside round surface of the boss portion, spline-fit in the crankshaft,
a key, for transmitting torque of the rotary shaft through the collar to the boss portion, with its one end, located on the inside round surface side, held immovable in the holding groove while the other end, located on the outside round surface side, inserted to be freely slidable in the keyway,
a supporting member disposed around the boss portion to cover the keyway, to be incapable of making axial motion relative to the boss portion, and
a damping member provided between the outside round face of the key and the inside round face of the supporting member, with its axial length greater than the axial length of the key, and disposed to be capable of making axial motion relative to the key.

Further aspects of the present invention relate to an engine unit and a vehicle comprising a transmission according to any of the previous aspects.

With the invention, it is possible, when the CVT having a key is used, to restrict noise caused with the key. Using this CVT also makes it possible to provide a straddle type of vehicle with reduced noise.

### BRIEF DESCRIPTION OF THE DRAWINGS

These and other aspects of the present invention will now be described, by way of example only, with reference to the accompanying drawings, in which:
FIG. 1 is a side view of a motorcycle related to a first embodiment of the invention;
FIG. 2 is a sectional view of an engine unit related to the first embodiment;
FIG. 3 is enlarged view of a primary sheave of a transmission unit;
FIG. 4 is a side view of a movable sheave half of the primary sheave;
FIG. 5 is an enlarged sectional view of the movable sheave half shown in FIG. 4;
FIG. 6 is an oblique view of a damping member according to an embodiment of the present invention;
FIGs. 7 (a) and 7(b) are side views of a key according to an embodiment of the present invention;
FIG. 8 is a schematic oblique view of the damping member and a boss portion in a modified embodiment of the present invention; and
FIG. 9 is a sectional view around the primary sheave of a conventional CVT.

### DETAILED DESCRIPTION OF THE DRAWINGS

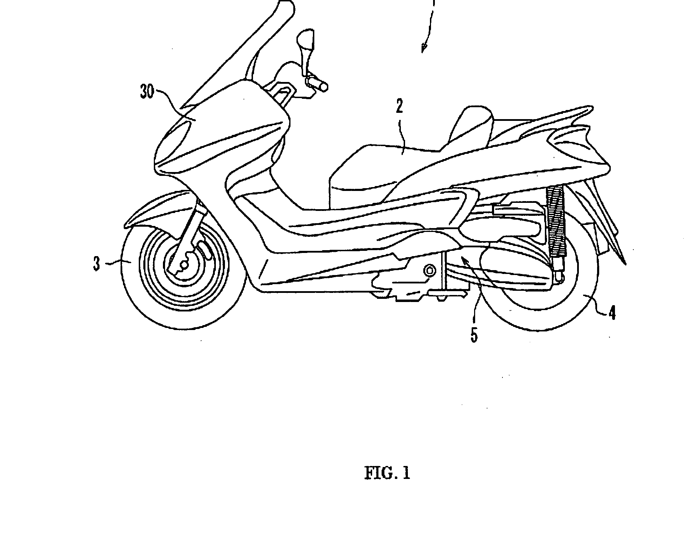

Hereinafter will be described the details of an embodiment of the invention in reference to the appended drawings. While the embodiment is described in relation to the scooter type of two-wheeled motor vehicle shown in FIG. 1, the straddle type of vehicle related to the invention is not limited to such a vehicle. The vehicle in question may be for example any motor vehicle of the so-called motorcycle type with a fuel tank mounted in front of the seat, an off-road type, a so-called moped type, etc. Further, the straddle type of motor vehicle related to the invention is not limited to the two-wheeled type but may be of other types such as the four-wheeled buggy.

FIG. 1 is a side view of the motorcycle 1 related to the invention. First, the overall constitution of the motorcycle 1 will be described with reference to FIG. 1. Incidentally, the terms of directions; front, rear, right and left, in the following description are meant as seen by a rider seated on a seat 2.

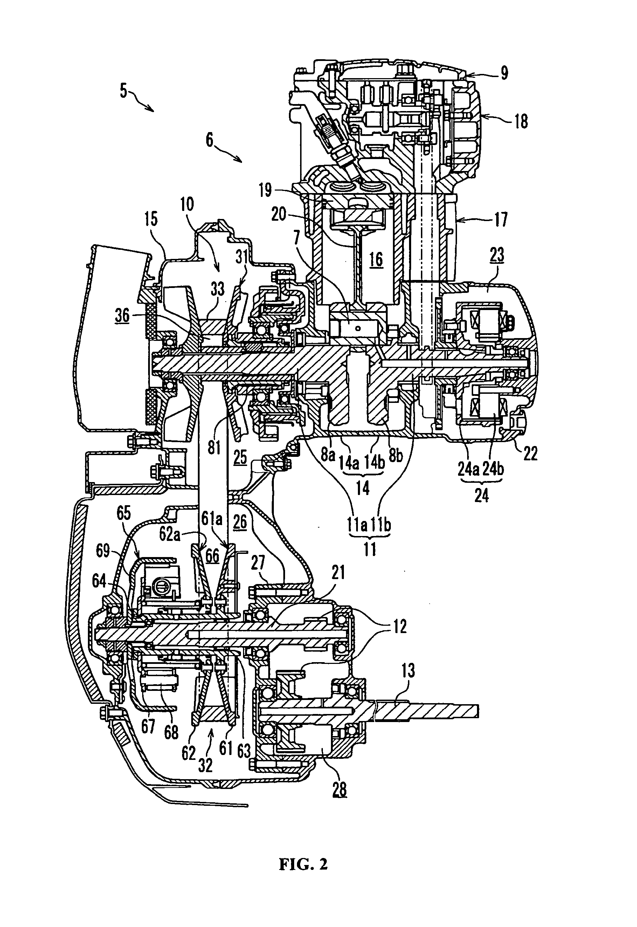

As shown in FIG. 1, most part of the front and lateral sides of the motorcycle 1 is covered with a wind-screen cowl 30. The motorcycle 1 is provided with a front wheel 3 and a driving wheel or a rear wheel 4, with a seat 2 in between. An engine unit 5 is mounted below the seat 2. The engine unit 5 of this embodiment is provided with a continuously variable transmission 10 (hereinafter called the CVT 10) related to this invention and with an engine 6 run on gasoline as fuel (as shown in FIG. 2). Incidentally, the engine 6 of the motorcycle 1 of this invention is not limited to an internal combustion engine run on gasoline as fuel but may be for example an electric motor engine.

FIG. 2 shows a section of the engine unit 5 of the motorcycle 1 shown in FIG. 1. As shown in FIG. 2, the engine unit 5 includes: the engine 6, the CVT 10 connected to a crankshaft 11 of the engine 6, a driven shaft 21 driven with the CVT 10, and an output shaft 13 connected through a gear train or speed reduction mechanism 12 to the driven shaft 21. Output of the engine 6, with its speed changed through the CVT 10, the driven shaft 21, and a speed reduction mechanism 12, is transmitted to the output shaft 13.

The engine 6 includes: the crankshaft 11, a crankcase 14 to contain the crankshaft 11, a cylinder block 17, a cylinder head 18, and a cylinder head cover 9. The crankcase 14 consists of a left hand case 14a and a right hand case 14b.

The crankshaft 11 is disposed to pass through both the left hand case 14a and the right hand case 14b of the crankcase 14, and is supported for free rotation with both the left hand case 14a and the right hand case 14b. The crankshaft 11 has two portions: a left hand portion 11a and a right hand portion 11b. The right end portion of the left hand portion 11a is formed with a crank web 8a; and the left end portion of the right hand portion 11b, with a crank web 8b. Both the crank webs 8a and 8b are interconnected through a crankpin 7. When the crankpin 7 in the above constitution is turned about the crankshaft 11, the left hand portion 11a and the right hand portion 11b of the crankshaft 11 turn as a single body.

A piston 19 is slidably disposed in a space 16 surrounded with the cylinder block 17 and the cylinder head 18. The piston 19 is connected to one end of a connecting rod 20, while the other end of the connecting rod 20 is connected to the crankpin 7. Thus, the crankshaft 11 is to turn along with the reciprocating motion of the piston 19.

A generator case 22 is attached to the right hand case 14b. The right end portion of the right hand portion 11b of the crankshaft is supported for free rotation on the generator case 22. A generator 24 is disposed in a space 23 formed with the right hand case 14b and the generator case 22c. The generator 24 is secured to the right hand portion 11b of the crankshaft 11, and includes: a rotor 24a rotating together, and a stator 24b located within the rotor 24a and secured to the generator case 22. With the above constitution, the generator 24 generates electricity as the crankshaft 11 rotates. Electricity generated with the generator 24 is supplied to electric components and a battery mounted on the motorcycle 1 (shown in FIG. 1).

The left hand case 14a extends farther rearward than the right hand case 14b. To the left hand case 14a is attached a transmission case 15. The transmission case 15 is disposed to face the left hand case 14a. The left hand case 14a and the transmission case 15 form a first space 25 and a second space 26 located one after the other. The first and second spaces 25 and 26 are interconnected, with the CVT 10 housed in both the spaces.

In the first space 25 is disposed the left hand portion 11a of the crankshaft 11. On the other hand in the second space 26, the driven shaft 21 is disposed parallel to the crankshaft 11. The second space 26 is provided with a partition wall 27. A third space 28 is defined with part of the left hand case 14a and the partition wall 27. The driven shaft 21 is disposed to pass through the third space 28. The driven shaft 21 is supported for free rotation respectively on the left hand case 14a, the partition wall 27, and the transmission case 15. In the third space 28 is disposed the output shaft 13 for driving to turn the driving wheel or the rear wheel 4 (shown in FIG. 1). The output shaft 13 is attached for free rotation on both the partition wall 27 and the left hand case 14a, respectively. The driven shaft 21 and the output shaft 13 are interconnected through the speed reduction mechanism 12 made up of a plural number of gears. The output shaft 13 rotates as driven with the driven shaft 21.

The CVT 10 comprises: a primary sheave 31 attached to the crankshaft 11, a secondary sheave 32 attached to the driven shaft 21, and a V belt 33 routed around the primary and secondary sheaves 31 and 32.

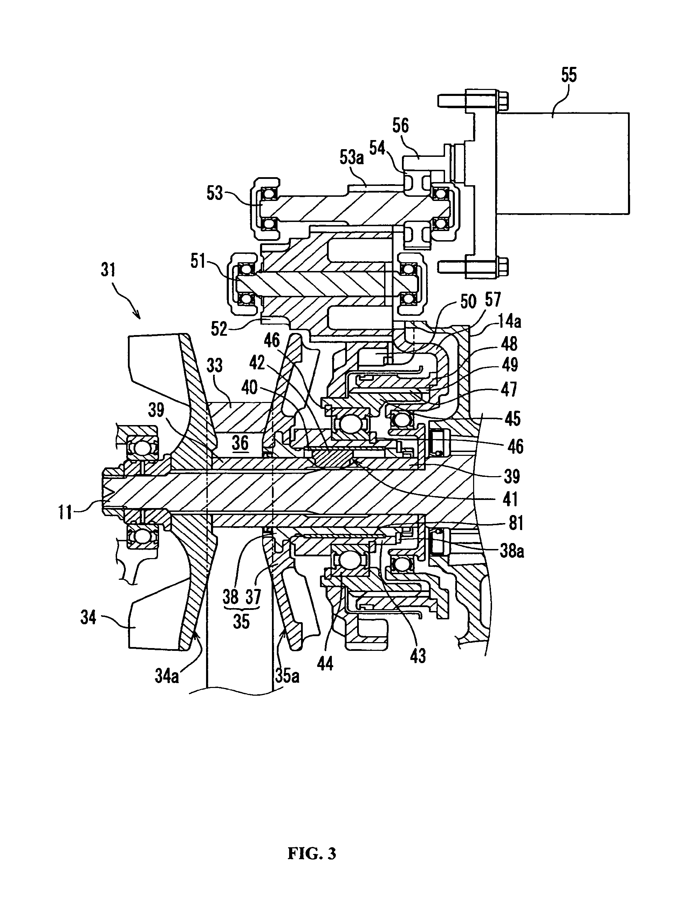

FIG. 3 is an enlarged view in the region of the primary sheave 31 of the CVT 10. As shown in FIG. 3, the primary sheave 31 includes: a fixed sheave half 34 secured to one end of the crankshaft 11, and a movable sheave half 35 attached for axial sliding on the crankshaft 11. The fixed sheave half 34 has a conical surface 34a. The movable sheave half 35 has a conical surface 35a. These conical surfaces 34a and 35a form a belt groove 36 of a trapezoid in cross section for the V belt 33 to run through.

The movable sheave half 35 of the primary sheave 31 has a main part 37 having the conical surface 35a and a cylindrical shaped boss portion 38 for covering the outside round surface of the crankshaft 11. A collar 39 of a generally cylindrical shape is disposed between the outside surface of the crankshaft 11 and the inside surface of the boss portion 38. The collar 39 is spline-fit to part of the crankshaft 11. Further, the boss portion 38 is secured to the collar 39 to be incapable of making relative rotation. As a result, the boss portion 38 of the movable sheave half 35 and the collar 39 rotate together with the rotation of the crankshaft 11.

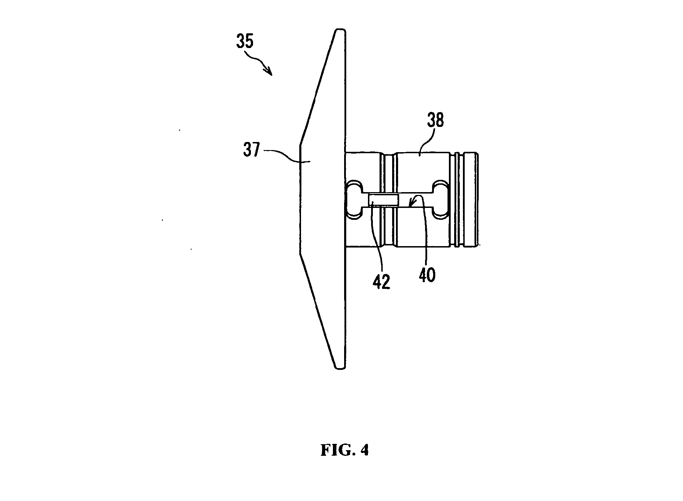

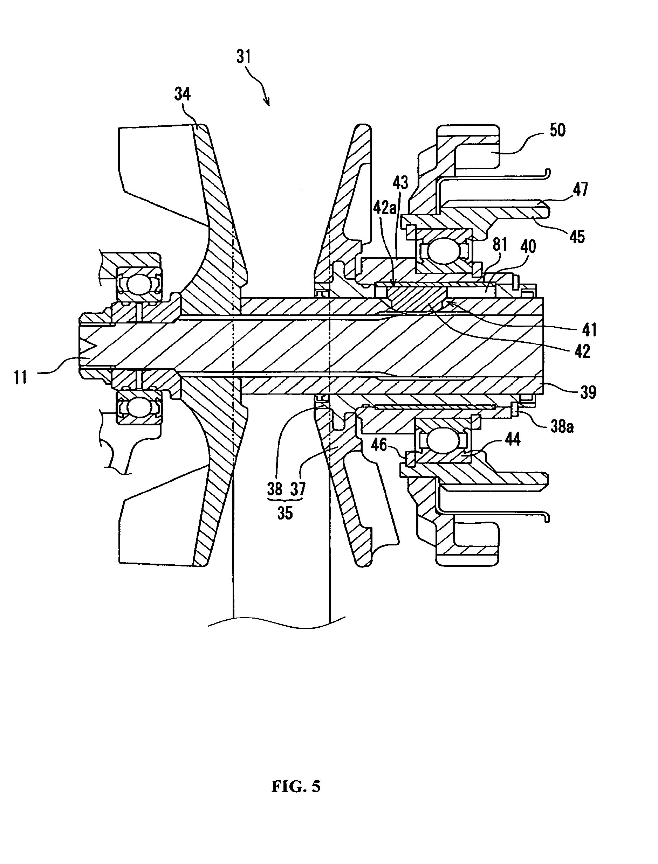

FIG. 4 is a side view of the movable sheave half 35. FIG. 5 shows a section, in enlarged scale, of the vicinity of the movable sheave half 35 shown in FIG. 4. As shown in FIG. 4, a longitudinally extending keyway 40 is provided in the boss portion 38 of the movable sheave half 35. As shown in FIG. 5, the collar 39 is formed with a holding groove 41 in a position overlapping the keyway 40 as seen in radial direction. A key 42 is inserted in the keyway 40 of the boss portion 38 so that the outer circumferential portion of the key 42 is freely slidable in the axial direction. The inside circumferential portion of the key 42 is immovably held in the holding groove 41 of the collar 39. Thus, torque of both the crankshaft 11 and the collar 39 is transmitted through the key 42 to the boss portion 38. As described above, while the boss portion 38 is incapable of rotating relative to the collar 39, it is capable of axially moving relative to the collar 39.

A generally cylindrical supporting member 43 is provided around the boss portion 38 of the movable sheave half 35, so that the keyway 40 is covered with the supporting member 43. The supporting member 43 is restricted from axial motion relative to the boss portion 38 by means of a stop ring 38a projecting from the boss portion 38 of the movable sheave 35.

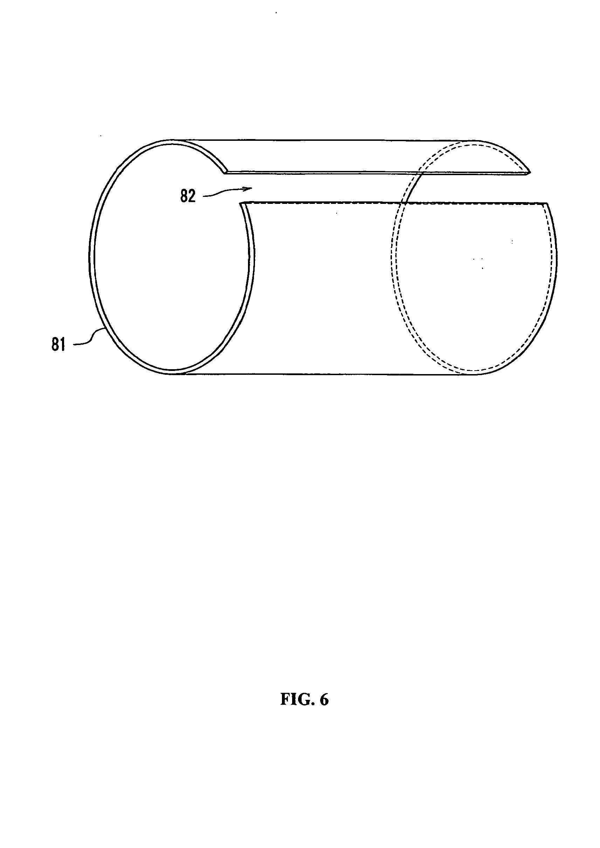

A damping member 81 is provided between the outside surface (hereinafter called the top face) 42a of the key 42 and the inside surface of the supporting member 43. A shown in FIG. 6, the damping member 81 is generally of a cylindrical shape, with a cutout 82 extending in the axial direction. As shown in FIG. 5, the damping member 81 covers the outside round end of the keyway 40, and is provided to be axially immovable relative to the boss portion 38.

The damping member 81 is made of a material lower in hardness than the supporting member 43. In this embodiment, the damping member 81 is made of fiberglass reinforced nylon, and the supporting member 43 is made of metal such as carbon steel. Incidentally, the damping member 81 and the supporting member 43 are not limited to those of this embodiment. For example, in the case the supporting member 43 is made of carbon steel, the damping member 81 may be made of a plastic material such as rubber, or a metal such as copper lower in hardness than carbon steel.

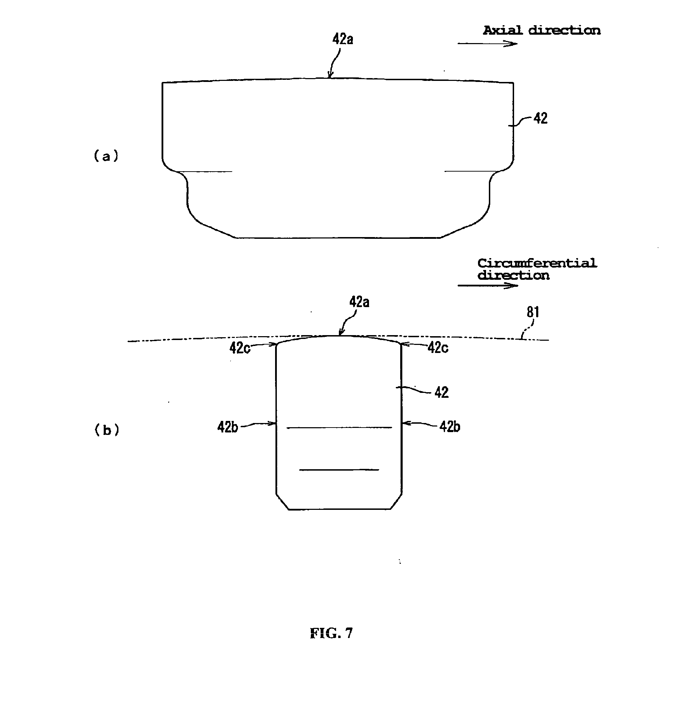

FIGs. 7 (a) and 7 (b) are sectional views of the key 42; with (a) as seen in the same direction as FIG. 5; and (b), in the axial direction of the crankshaft 11 shown in FIG. 3. As shown in FIGs. 7 (a) and 7(b), the top face 42a of the key 42 is curved in both axial and circumferential directions of the crankshaft 11 (refer to FIG 3). Therefore, the top face 42a has no generatrix. In this embodiment, the top face 42a is formed in spherical shape. The curvature of the top face 42a as seen in the axial direction of the crankshaft 11 (in FIG. 3) is made equal to or greater than the curvature of the inside surface of the damping member 81. Incidentally, FIG. 7(b) shows the case in which the curvature of the top face 42a is greater than the curvature of the inside round surface of the damping member 81.

As shown in FIG. 3, a bearing 44 is provided around the supporting member 43. A feeding screw 45 is provided around the bearing 44. It is constituted that the movable sheave half 35, the supporting member 43, the bearing 44, and the feeding screw 45 move axially like a single body. That is, the bearing 44 is restricted with a stop ring 46 from axial motion relative to both the supporting member 43 and the feeding screw 45. As already described before, the supporting member 43 is restricted from axially moving relative to the boss portion 38 of the movable sheave half 35.

To the left hand case 14a is secured a housing 57 to which is secured a feeding guide 48 with its inside surface formed with a female thread 49. On the other hand, a male thread 47 is formed on the outside surface of the feeding screw 45. The feeding screw 45 and the feeding guide 48 are disposed so that the male screw 47 and the female screw 49 are in constant mesh with each other. It is adapted that, when the feeding screw 45 is driven to turn, the male screw 47 moves axially on the female screw 49.

To the outside surface of the feeding screw 45 is fit a driven gear 50 to be incapable of making relative rotation. The driven gear 50 is in constant mesh with a transmission drive gear 52 of a transmission drive shaft 51 disposed parallel to the crankshaft 11. The transmission drive gear 52 is in constant mesh with a gear portion 53a of an idler shaft 53 disposed parallel to both the crankshaft 11 and the transmission drive shaft 51. A gear 54, engaging with the idler shaft 53 to be incapable of making relative rotation, is in constant mesh with a rotary shaft 56 of an electric motor 55.

As described above, a power conversion mechanism is constituted to cause sliding motion of the movable sheave half 35 in the axial direction of the crankshaft 11 while receiving driving force from the electric motor 55 through the supporting member 43, the bearing 44, the feeding screw 45, the feeding guide 48, the driven gear 50, the transmission drive shaft 51, and the idler shaft 53. Thus, when the driven gear 50 is driven to rotate with the electric motor 55, the movable sheave half 35, the supporting member 43, the bearing 44, the feeding screw 45, and the driven gear 50 axially reciprocate like a single body. As a result, the movable sheave half 35 moves toward or away from the fixed sheave half 34, so that the width (axial distance) of the belt groove 36 formed with both the sheave halves 34 and 35 changes. Therefore, the radial position of the V belt 33 routed around these sheave halves varies, resulting in the change in the transmission ratio. At this time, the boss portion 38 having the keyway 40, the damping member 81, and the supporting member 43 move relative to the key 42 in the axial direction of the crankshaft 11.

On the other hand as shown in FIG. 2, the secondary sheave 32, like the primary sheave 32, includes: a fixed sheave half 61 axially fixed relative to the driven shaft 21, and a movable sheave half 62 attached to be slidable in the axial direction of the driven shaft 21. The fixed sheave half 61 has a conical surface 61a. The movable sheave half 62 has a conical surface 62a. These conical surfaces 61a and 62a form a belt groove 66 of a trapezoid in cross section for the V belt 33 to run through.

The fixed sheave half 61 has a cylindrical guide 63. The guide 63 is disposed around the driven shaft 21 through a bearing 64 and supported for rotation relative to the driven shaft 21. A centrifugal clutch 65 is interposed between the fixed sheave half 61 and the driven shaft 21. The centrifugal clutch 65 includes: a centrifugal plate 67 rotating together with the guide 63 of the fixed sheave half 61, centrifugal weights 68 supported with the centrifugal plate 67, and a clutch housing 69 fixed to the left end of the driven shaft 21 to rotate together with the driven shaft 21.

With the above constitution, when the revolution of the centrifugal plate 67 rotating together with the fixed sheave half 61 reaches a specified value, the centrifugal weights 68 move radially outward due to centrifugal forces. As a result, the centrifugal weights 68 come into contact with the clutch housing 69 to transmit the rotation of the fixed sheave half 61 to the driven shaft 21. In effect, even if the primary sheave 31 is driven to rotate with the crankshaft 11 and the secondary sheave 32 is driven to rotate through the V belt 33, the secondary sheave 32 rotates free from the driven shaft 21 until the revolution reaches the specified value. Once the revolution reaches the specified value, the secondary sheave 32 and the driven shaft 21 are interconnected through the centrifugal clutch 65, so that they rotate together.

When the width of the belt groove 36 of the primary sheave 31 is varied by the drive of the electric motor 55 while the secondary sheave 32 and the driven shaft 21 are rotating together, the width of the belt groove 66 of the secondary sheave 32 also varies, resulting in change in transmission ratio. That is, when the width of the belt groove 36 of the primary sheave 31 decreases, the V belt 33 moves forward to increase the width of the belt groove 66 of the secondary sheave 32. As a result, transmission ratio decreases. On the other hand, when the width of the belt groove 36 of the primary sheave 31 increases, the V belt 33 moves rearward to decrease the width of the belt groove 66 of the secondary sheave 32. As a result, transmission ratio increases.

With the above constitution, when the engine 6 is started and the crankshaft 11 is driven to rotate, the driven shaft 21 is rotated through the CVT 10. The rotation of the driven shaft 21 is transmitted through the speed reduction mechanism 12 to the output shaft 13. As a result, the driving wheel or the rear wheel 4 is driven to rotate so as to drive the motorcycle 1.

When the engine 6 is started, a mixture of fuel and air burns to apply a force to the piston 19, and the piston 19 reciprocates at high speeds. In particular when the piston 19 comes to the top dead center or the bottom dead center, significant forces are applied to the crankshaft 11 connected to the piston 19 through the connecting rod 20. As a result, slight elastic deflection occurs on the crankshaft 11. Thus, the crankshaft 11, when it rotates, suffers vibration due to the motion of both the piston 19 and the connecting rod 20.

In the CVT 10 of the invention, however, the damping member 81 is disposed between the key 42 and the supporting member 43. Therefore, with the above CVT 10, even when the crankshaft 11 rotates under vibration and accordingly the key 42 runs wild in the keyway 40, as the top face 42a (outside face) of the key 42 contacts the damping member 81, impact due to collision is alleviated. Therefore, the CVT 10, unlike the conventional CVT, makes it possible to restrict noise caused by the contact between the key 42 and the supporting member 43. The damping member 81 is also disposed to be axially movable relative to the key 42. Therefore, the key 42 does not contact always at the same part on the damping member 81 but at different parts within the damping member 81. Thus, it is possible to restrict wear on the damping member 81 and improve durability of the damping member 81.

In the CVT 10, the collar 39, spline-fit in the crankshaft 11, is provided between the outside surface of the crankshaft 11 and the inside surface of the boss portion 38; and the key 42 is held immovable in the holding groove 41 formed in the collar 39. Therefore, the engine unit 5 using the easily-manufactured collar 39 makes it possible to easily realize interlocked motion of the key 42 and the crankshaft 11. It is also possible to reduce manufacturing costs. As the assembly is facilitated, replacement work or the like is also facilitated.

Further in the CVT 10, the damping member 81 covers the keyway 40. Therefore, it is possible to prevent contact between the top face 42a of the key 42 and the supporting member 43 more securely. Therefore, even if the movable sheave half 35 slides in the axial direction of the crankshaft 11, the top face 42a of the key 42 comes into contact with the damping member 81 without fail and does not come into contact with the supporting member 43. Therefore, it is possible to alleviate impact due to collision between the top face 42a of the key 42 and the supporting member 43.

The damping member 81 of the CVT 10 is provided to be rotatable relative to the boss portion 38. Therefore, in the CVT 10, it is possible to prevent the top face 42a of the key 42 from continuously contacting the same part of the damping member 81 because the damping member 81 rotates relative to the boss portion 38. Therefore, the CVT 10 makes it possible to prevent wear on the damping member 81 and improve durability of the damping member 81. In this embodiment, the damping member 81 is formed in generally cylindrical shape. This makes it easy to install the damping member 81 to be capable of rotating relative to the boss portion 38.

The damping member 81 of the CVT 10 has the cutout 82 which makes it possible to fit the damping member 81 in position while forcing its diameter to increase or decrease. Therefore, the damping member 81 is easily fit in position. Incidentally, while this embodiment uses the damping member 81 having the cutout 82, a cylindrical damping member 81 without the cutout 82 may also be used. Further, the ratio of the cutout 82 to other part is not limited to that shown in FIG. 6. The cutout 82 may be a cut line extending in the axial direction of the damping member 81.

The damping member 81 of the CVT 10 is made of a material lower in hardness than the supporting member 43. Therefore, it is possible to alleviate impact due to collision between the top face 42a of the key 42 and the inside round surface of the supporting member 43. Therefore, forming the damping member 81 with a material lower in hardness than the supporting member 43 further makes it possible to prevent noise.

Moreover, while the damping member 81 of the CVT 10 is made of fiberglass reinforced nylon, the damping member 81 of this invention may be made of plastics other than nylon. The key 42 and the supporting member 43 are often made of metal to secure strength. Plastics are generally higher in viscosity than metals. Therefore, in the case the damping member 81 is made of plastics, interposing the damping member 81 between the metallic key 42 and the metallic supporting member 43 improves sound absorbing effect to further prevent noise.

The damping member 81 of the CVT 10 is made of fiberglass reinforced nylon. Therefore, both thermal resistance and durability of the damping member 81 are improved. Incidentally, the damping member 81 related to the invention may be made of a plastic, other than nylon, in which glass fibers are mixed. Even when such a plastic material is used, it is possible to improve thermal resistance of the damping member 81.

Depending on the state of the crankshaft 11 (for example when it is subject to large vibration during rotation), there are cases in which the impact forces between the key 42 and the damping member 81 are large. Even in such a case, the damping member 81 in this embodiment, if it is made of a material having flexibility such as plastics, absorbs and alleviates the shocks. To put it more in detail, first, the top face 42a of the key 42 and the inside round surface of the damping member 81 come into point contact with each other. When the key 42 is pressed hard against the damping member 81, the damping member 81 deflects due to the great force received from the key 42. At this time, the damping member 81 deforms to adapt to the shape of the key 42. As a result, the key 42 and the damping member 81 come into surface contact with each other. In the case the damping member 81 is made of a material having flexibility such as plastics, even when the impact force of the key 42 against the damping member 81 is large, as the top face 42a of the key 42 comes into surface contact with the inside round surface of the damping member 81, pressure working on the surfaces of both components is lowered. Therefore, in such a case, it is possible to prevent wear on both of the components, the key 42 and the damping member 81, to improve durability.

The top face 42a of the key 42 of the CVT 10 is a curved surface having no generatrix. Therefore, the top face 42a of the key 42 and the damping member 81 come into contact with each other not along a line but at a point. If the top face 42a had a generatrix for example, the top face 42a and the damping member 81 would come into line contact with each other along the generatrix. However, in the case the top face 42a has a generatrix, and the top face 42a and the damping member are made to come into contact with each other by a great impact force, the generatrix becomes an edge on the top face 42a, and the damping member 81 might be damaged with the generatrix. As a result, both the key 42 and the damping member 81 tend to wear away easily. However, because the top face 42a of the key 42 of the CVT 10 is a surface that does not have a generatrix, the CVT 10 makes it possible to prevent wear on both the key 42 and the damping force 81 and improve durability.

In this embodiment, the curved surface of the top face 42a is a spherical surface. Because the key 42 of this embodiment comes into gentle contact with the damping member 81, it is further possible to prevent noise and wear on the key 42 and the damping member 81.

In this embodiment, the top face 42a is formed so that its curvature as seen in the axial direction of the crankshaft 11 is equal to or greater than the curvature of the inside circumferential surface of the damping member 81 as shown in FIG. 7(b). As a result, the damping member 81 is less likely to come into contact with the edge 42c formed with the top face 42a and the side face 42b of the key 42. Therefore, it is possible to prevent wear on the damping member 81 caused by the edge 42c of the key 42.

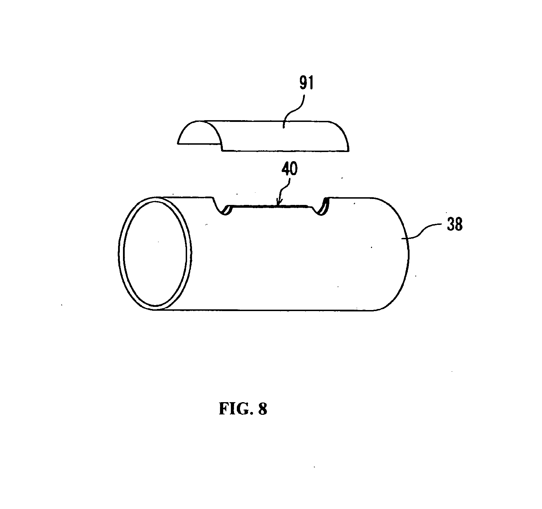

In the above embodiment, the damping member 81 is formed in the cylindrical shape and wound on the outside round surface of the boss portion 38. However, the damping member of this invention may not be in the cylindrical shape like the damping member 81. For example, it may be a damping member 91, as shown in FIG. 8, a cutout from a cylindrical shape with a size enough for covering the keyway 40. Such a damping member 91 may be secured to the outside round surface of the boss portion 38. Even with such a shape of damping member 81, it is possible to prevent collision between the key 42 and the supporting member 43 and restrict noise. Moreover, even the use of the above damping member 91 makes a constitution possible in which the key 42 and the damping member 91 are capable of making relative axial motion. Therefore, it is possible to prevent wear on the damping member 91 and improve durability.

It should be understood, however, that any form of damping member may be utilized to prevent the top face 42a of the key 42 and the supporting member 43 from contacting each other. Therefore, it is a matter of course that one with a slit in the damping member 81 or the damping member 91, or one with a partial cutout also falls within the damping member related to this invention.

As describe above, this invention is applicable to CVTs and straddle type of vehicles provided with the CVT.

### Description of Reference Numerals and Symbols

- 1:: motorcycle
- 10:: CVT (continuously variable transmission)
- 11:: crankshaft (rotary shaft)
- 34:: fixed sheave half
- 35:: movable sheave half
- 38:: boss portion
- 39:: collar
- 40:: keyway
- 41:: holding groove
- 42:: key
- 42a:: top face
- 43:: supporting member
- 81:: damping member
- 82:: cutout
- 91:: damping member

## Claims

1. A continuously variable transmission (10) comprising:
a fixed sheave (34) fixed to a rotary shaft (11);
a movable sheave (35) having a boss portion (38) axially slidably mounted about the rotary shaft (11), wherein the boss portion (38) comprises an axially extending keyway (40);
a key (42) inserted to be freely axially slidable in the keyway (40) and adapted to rotatably couple the rotary shaft (11) and the boss portion (38);
a supporting member (43) disposed around and axially secured relative to the boss portion (38) to cover the keyway (40); and
a damping member (81) disposed between an outer face of the key (42) and an inner face of the supporting member (43) **characterized by** the damping member (81) being adapted to move axially relative to the key (42), wherein an axial length of the damping member (81) is greater than the axial length of the key (42);
wherein
the damping member (81) is adapted to rotate relative to the boss portion (38).

2. The continuously variable transmission (10) of Claim 1, further comprising a collar (39) rotatably secured relative to the rotary shaft (11) and disposed between an outer surface of the rotary shaft (11) and an inner surface of the boss portion (38), wherein the collar (39) is formed with a holding groove (41) adapted to receive an inner end of the key (42) such that the key (42) extends through the collar (39) between the boss portion (38) and the rotary shaft (11).

3. The continuously variable transmission (10) of Claim 1 or 2, wherein the damping member (81) covers the keyway (40).

4. The continuously variable transmission (10) of any preceding Claim, wherein the damping member (81) is of a cylindrical shape.

5. The continuously variable transmission (10) of any preceding Claim, wherein the damping member (81) is provided with an axially extending cutout (82).

6. The continuously variable transmission (10) of any preceding Claim, wherein the damping member (81) comprises a material lower in hardness than the material of the supporting member (43).

7. The continuously variable transmission (10) of any preceding Claim, wherein the damping member (81) comprises a plastic material.

8. The continuously variable transmission (10) of any preceding Claim, wherein the damping member (81) comprises a fiberglass reinforced plastic material.

9. The continuously variable transmission (10) of any preceding Claim, wherein the key (42) defines a curved outer surface (42a).

10. The continuously variable transmission (10) of Claim 9, wherein the curved outer surface (42a) of the key (42) is curved with respect to both the axis of the rotary shaft (11) and the circumferential direction of the rotary shaft (11).

11. The continuously variable transmission (10) of Claim 9 or 10, wherein the curved outer surface (42a) of the key (42) is defined by a surface having no generatrix.

12. The continuously variable transmission (10) of Claim 9, 10 or 11, wherein the curved outer surface (42a) of the key (42) defines a spherical surface.

13. The continuously variable transmission (10) of any one of Claims 9 to 12, wherein the damping member (81) defines a curved surface with respect to the circumferential direction of the rotary shaft (11), and the curvature of the curved outer surface (42a) of the key (42) as seen in the axial direction of the rotary shaft (11) is greater than the curvature of the curved surface of the damping member (81).

14. A straddle type of vehicle (1) comprising a continuously variable transmission (10) of any preceding Claim.

## Patentansprüche

1. Stufenlos verstellbares Getriebe (10), das Folgendes umfasst:
eine an einer Drehwelle (11) befestigte unbewegliche Treibscheibe (34);
eine bewegliche Treibscheibe (35) mit einem Nabenabschnitt (38), der axial verschieblich um die Drehwelle (11) montiert ist, wobei der Nabenabschnitt (38) eine axial verlaufende Keilnut (40) aufweist,
eine Passfeder (42), die frei axial verschieblich in der Keilnut (40) angeordnet und so gestaltet ist, dass sie die Drehwelle (11) und den Nabenabschnitt (38) drehbar koppelt;
ein Tragelement (43), das um den Nabenabschnitt (38) herum angeordnet und axial relativ zu diesem befestigt ist, um die Keilnut (40) zu bedecken; und
ein Dämpfungselement (81), das zwischen einer Außenfläche der Passfeder (42) und einer Innenfläche des Tragelements (43) angeordnet ist, **dadurch gekennzeichnet, dass** das Dämpfungselement (81) so gestaltet ist, dass es sich axial relativ zu der Passfeder (42) bewegt, wobei eine axiale Länge des Dämpfungselementes (81) größer ist als die axiale Länge der Passfeder (42); wobei
das Dämpfungselement (81) so ausgelegt ist, dass es relativ zu dem Nabenabschnitt (38) rotiert.

2. Stufenlos verstellbares Getriebe (10) nach Anspruch 1, das ferner einen Bund (39) umfasst, der drehbar relativ zu der Drehwelle (11) befestigt und zwischen einer Außenfläche der Drehwelle (11) und einer Innenfläche des Nabenabschnitts (38) angeordnet ist, wobei der Bund (39) mit einer Haltenut (41) zum Aufnehmen eines inneren Endes der Passfeder (42) ausgebildet ist, so dass die Passfeder (42) durch den Bund (39) zwischen dem Nabenabschnitt (38) und der Drehwelle (11) verläuft.

3. Stufenlos verstellbares Getriebe (10) nach Anspruch 1 oder 2, wobei das Dämpfungselement (81) die Keilnut (40) bedeckt.

4. Stufenlos verstellbares Getriebe (10) nach einem der vorherigen Ansprüche, wobei das Dämpfungselement (81) eine zylindrische Form hat.

5. Stufenlos verstellbares Getriebe (10) nach einem der vorherigen Ansprüche, wobei das Dämpfungselement (81) mit einem axial verlaufenden Ausschnitt (82) versehen ist.

6. Stufenlos verstellbares Getriebe (10) nach einem der vorherigen Ansprüche, wobei das Dämpfungselement (81) ein Material mit einer Härte umfasst, die geringer ist als die des Materials des Tragelements (43).

7. Stufenlos verstellbares Getriebe (10) nach einem der vorherigen Ansprüche, wobei das Dämpfungselement (81) ein Plastikmaterial umfasst.

8. Stufenlos verstellbares Getriebe (10) nach einem der vorherigen Ansprüche, wobei das Dämpfungselement (81) ein glasfaserverstärktes Plastikmaterial umfasst.

9. Stufenlos verstellbares Getriebe (10) nach einem der vorherigen Ansprüche, wobei die Passfeder (42) eine gekrümmte Außenfläche (42a) definiert.

10. Stufenlos verstellbares Getriebe (10) nach Anspruch 9, wobei die gekrümmte Außenfläche (42a) der Passfeder (42) mit Bezug auf die Achse der Drehwelle (11) und die Umfangsrichtung der Drehwelle (11) gekrümmt ist.

11. Stufenlos verstellbares Getriebe (10) nach Anspruch 9 oder 10, wobei die gekrümmte Außenfläche (42a) der Passfeder (42) von einer Oberfläche ohne Erzeugende definiert wird.

12. Stufenlos verstellbares Getriebe (10) nach Anspruch 9, 10 oder 11, wobei die gekrümmte Außenfläche (42a) der Passfeder (42) eine sphärische Oberfläche definiert.

13. Stufenlos verstel1bares Getriebe (10) nach einem der Ansprüche 9 bis 12, wobei das Dämpfungselement (81) eine gekrümmte Oberfläche mit Bezug auf die Umfangsrichtung der Drehwelle (11) definiert und die Krümmung der gekrümmten Außenfläche (42a) der Passfeder (42) in der axialen Richtung der Drehwelle (11) gesehen größer ist als die Krümmung der gekrümmten Oberfläche des Dämpfungselementes (81).

14. Rittlings gefahrenes Fahrzeug (1) mit einem stufenlos verstellbaren Getriebe (10) nach einem der vorherigen Ansprüche.

## Revendications

1. Transmission à variation continue (10), comprenant :
une poulie fixe (34) fixée à un arbre rotatif (11) ;
une poulie mobile (35), comportant une partie de bossage (38) montée axialement et de manière coulissante autour de l'arbre rotatif (11), la partie de bossage (38) comprenant une rainure de clavette à extension axiale (40) ;
une clavette (42), insérée de sorte à pouvoir glisser axialement et librement dans la rainure de clavette (40) et adaptée pour accoupler de manière rotative l'arbre rotatif (11) et la partie de bossage (38) ;
un élément de support (43), agencé autour de la partie de bossage (38) et fixé axialement sur celle-ci, pour recouvrir la rainure de clavette (40) ; et
un élément amortisseur (81), agencé entre une face externe de la clavette (42) et une face interne de l'élément de support (43), **caractérisée en ce que** l'élément amortisseur (81) est adapté pour se déplacer axialement par rapport à la clavette (42), une longueur axiale de l'élément amortisseur (81) étant supérieure à la longueur axiale de la clavette (42) ; dans laquelle
l'élément amortisseur (81) est adapté pour tourner par rapport à la partie de bossage (38).

2. Transmission à variation continue (10) selon la revendication 1, comprenant en outre un collier (39) fixé de manière rotative sur l'arbre rotatif (11) et agencé entre une surface externe de l'arbre rotatif (11) et une surface interne de la partie de bossage (38), le collier (39) comportant une rainure de retenue (41) adaptée pour recevoir une extrémité interne de la clavette (42), de sorte que la clavette (42) s'étend à travers le collier (39) entre la partie de bossage (38) et l'arbre rotatif (11).

3. Transmission à variation continue (10) selon les revendications 1 ou 2, dans laquelle l'élément amortisseur (81) recouvre la rainure de clavette (40).

4. Transmission à variation continue (10) selon l'une quelconque des revendications précédentes, dans laquelle l'élément amortisseur (81) a une forme cylindrique.

5. Transmission à variation continue (10) selon l'une quelconque des revendications précédentes, dans laquelle l'élément amortisseur (81) comporte un évidement à extension axiale (82).

6. Transmission à variation continue (10) selon l'une quelconque des revendications précédentes, dans laquelle l'élément amortisseur (81) comprend un matériau ayant une dureté inférieure à celle du matériau de l'élément de support (43).

7. Transmission à variation continue (10) selon l'une quelconque des revendications précédentes, dans laquelle l'élément amortisseur (81) comprend un matériau plastique.

8. Transmission à variation continue (10) selon l'une quelconque des revendications précédentes, dans laquelle l'élément amortisseur (81) comprend un matériau plastique renforcé de fibres de verre.

9. Transmission à variation continue (10) selon l'une quelconque des revendications précédentes, dans laquelle la clavette (42) définit une surface externe courbée (42a).

10. Transmission à variation continue (10) selon la revendication 9, dans laquelle la surface externe courbée (42a) de la clavette (42) est courbée par rapport à l'axe de l'arbre rotatif (11) et par rapport à la direction circonférentielle de l'arbre rotatif (11).

11. Transmission à variation continue (10) selon les revendications 9 ou 10, dans laquelle la surface externe courbée (42a) de la clavette (42) est définie par une surface ne comportant pas de génératrice.

12. Transmission à variation continue (10) selon les revendications 9, 10 ou 11, dans laquelle la surface externe courbée (42a) de la clavette (42) définit une surface sphérique.

13. Transmission à variation continue (10) selon l'une quelconque des revendications 9 à 12, dans laquelle l'élément amortisseur (81) définit une surface courbée par rapport à la direction circonférentielle de l'arbre rotatif (11), la courbure de la surface externe courbée (42a) de la clavette (42), vue dans la direction axiale de l'arbre rotatif (11), étant plus grande que la courbure de la surface courbée de l'élément amortisseur (81).

14. Véhicule du type à enfourcher (1), comprenant une transmission à variation continue (10) selon l'une quelconque des revendications précédentes.
